# EUROPÄISCHE PATENTSCHRIFT

(11) **EP 3 320 161 B1**
(45) Veröffentlichungstag und Bekanntmachung des Hinweises auf die Patenterteilung: **11.03.2020**
(21) Anmeldenummer: 16747435.2
(22) Anmeldetag: 08.07.2016
(51) Int. Cl.: E04H 12/08, F03D 1/00, E04H 12/34, F03D 13/20

(54) **TURM EINER WINDKRAFTANLAGE**
TOWER FOR A WIND POWER PLANT
TOUR D'UNE ÉOLIENNE

(30) Priorität: 09.07.2015 DE 102015111109
(43) Veröffentlichungstag der Anmeldung: 16.05.2018
(73) Patentinhaber: VENSYS Energy AG, 66539 Neunkirchen (DE)
(72) Erfinder: RINCK, Jürgen, 66399 Mandelbachtal (DE)
(74) Vertreter: Patentanwälte Bernhardt / Wolff Partnerschaft mbB
(86) Internationale Anmeldenummer: PCT/DE2016/100303
(87) Internationale Veröffentlichungsnummer: WO 2017/005252

(56) Entgegenhaltungen:
- EP-A1- 2 857 615
- DE-A1-102010 039 796
- DE-A1-102011 053 017
- JP-A- 2007 321 710
- US-A1- 2011 138 721

## Beschreibung

Die Erfindung betrifft einen Turm einer Windkraftanlage, der zumindest einen Turmabschnitt umfasst, der mehrere tragende Wandelemente aufweist, welche horizontal nebeneinander angeordnet eine Außenwand des Turms bilden, wobei eine starre Verbindung zwischen den Wandelementen, die direkt nebeneinander angeordnet sind, über horizontale Endabschnitte der Wandelemente gebildet ist und nicht oder lediglich abschnittsweise über vertikale Ränder der Wandelemente erfolgt, wobei die vertikalen Ränder der Wandelemente, die jeweils direkt benachbart zueinander angeordnet sind, in horizontaler Richtung vollständig in Abstand voneinander angeordnet sind.
Die Erfindung betrifft ferner ein Verfahren zur Herstellung des Turms.

Zur Errichtung von Windkraftanlagen, deren Turmkopf in einem Abstand von mehr als 100 m vom Boden angeordnet ist, müssen aus statischen Gründen Türme verwendet werden, die an ihrem Fuß, mit dem sie auf einem Fundament befestigt werden, einen Durchmesser aufweisen, der größer als 4,30 m ist. Da sich einteilige Bauelemente, die den Fuß des Turms bilden könnten, nicht über die vorhandenen Verkehrswege transportieren lassen, wird der Fuß des Turms entweder vor Ort durch eine Betonkonstruktion oder aus mehreren vorgefertigten, miteinander zu verbindenden Wandelementen aufgebaut.

Ein Windkraftanlagenturm der eingangs genannten Art geht aus der DE 10 2010 039 796 A1 hervor. Der Turm weist einen unteren rohrförmigen Turmabschnitt aus Beton und einen oberen rohrförmigen Turmabschnitt aus Stahl sowie ein Adpaterstück zur Verbindung der beiden Turmabschnitte auf. Der untere Turmabschnitt ist aus einzelnen, ringförmigen Betonfertigteilen aufgebaut, welche aus jeweils zwei Ringsegmenten bestehen.

Ein weiterer solcher Windkraftanlagenturm ist aus der DE 10 2011 053 017 A1 bekannt.
Die US 2011/0138 721 A1 beschreibt einen Turm einer Windkraftanlage, der mit drei stelzenartigen Trägern auf Betonträgern befestigt wird. An oberen Enden der Träger ist ein zylindrischer oberer Turmabschnitt angeordnet, der den Kopf der Windkraftanlage trägt. Die Träger sind in ihren oberen Endabschnitt derart ausgebildet, dass sich ihre vertikalen Ränder unter Anlage aneinander durch Verschraubung miteinander verbinden lassen.

In der EP 2 857 615 A1 ist ein hohler Betonturm beschrieben, der aus vorgeformten Teilen gebildet ist.

Ein weiterer Turm der aus mehreren vorgefertigten und miteinander verbindbaren Wandelementen gebildet ist, geht aus der
WO 2009/097858 A1 hervor. Entlang seitlicher vertikaler Ränder der Wandelemente sind Flansche gebildet, mittels derer sich die Wandelemente, die horizontal nebeneinander angeordnet sind, direkt miteinander verbinden lassen.
Zum Errichten des Turms aus den Wandelementen muss ein großer Aufwand betrieben werden. Zum einen müssen die Wandelemente passgenau zueinander aufgestellt werden, damit die Flansche miteinander verbunden werden können. Darüber hinaus ist eine Bildung, Prüfung und Wartung von Verbindungen, die über die Flansche gebildet sind, aufwendig, zumal Bereiche des Turms, in denen die Flansche angeordnet sind, im Turm oftmals nicht oder nur schwer zugänglich sind.

Der Erfindung liegt die Aufgabe zugrunde, einen Turm der eingangs genannten Art zu schaffen, der verglichen mit den bekannten Türmen einfacher zu errichten ist.

Erfindungsgemäß wird diese Aufgabe dadurch gelöst, dass zwischen den Wandelementen Mittel zur Abdichtung des Turms nach außen angeordnet sind.

Überraschend hat sich gezeigt, dass sich der Turmabschnitt auch dann ausreichend stabil für die großen mechanischen Belastungen, die auf die Windkraftanlage wirken, ausbilden lässt, wenn auf eine über die gesamte Länge der vertikalen Ränder gebildete starre Verbindung der Wandelemente untereinander, die zur Übertragung von auf die Wandelemente wirkenden Kräfte und Drehmomente geeignet ist, verzichtet wird.

Da bei Anordnung der Wandelemente in erfindungsgemäßer Weise in Abstand voneinander kein unmittelbarer Kontakt der Wandelemente an ihren vertikalen Rändern stattfindet, vereinfacht sich zum einen der Aufwand zum Errichten des Turms erheblich, zum anderen müssen die Wandelemente nicht dazu ausgelegt werden, Belastungen, die durch den direkten Kontakt auftreten, standzuhalten.

Die Mittel zur Abdichtung des Turms nach außen sind vorgesehen, um Hohlräume zwischen den Wandelementen, die durch die Anordnung der Wandelemente im Abstand voneinander, gebildet sind zu schließen und so ein Inneres des Turmabschnitts vor Umwelteinflüssen zu schützen. Die Abdichtungsmittel, die vorzugsweise aus einem elastischen Dichtungsgummi oder dergleichen gebildet sein können, dienen lediglich der Abdeckung und bilden keine starre Verbindung zwischen den Wandelementen.
Um die Möglichkeit zu schaffen, auch dann durch die Räume zwischen den vertikalen Rändern der Wandelemente zu greifen, wenn dort das Mittel zur Abdichtung vorgesehen ist, kann in dem Bereich, in dem das Verbindungselement mit den Wandelementen verbunden ist, insbesondere neben dem Verbindungselement, eine, vorzugsweise verschließbare, Öffnung vorgesehen sein, durch die hindurch sich zur Montage, Prüfung und/oder Wartung hindurchgreifen lässt.

Werden, wie in der bevorzugten Ausführungsform der Erfindung vorgesehen, lediglich die horizontalen Endabschnitte, nicht jedoch die vertikalen Ränder der Wandelemente zur Ausbildung der starren Verbindung benutzt, entfällt vorteilhaft der Aufwand zur Bildung der starren Verbindung über die vertikalen Endabschnitte beim Errichten des Turmabschnitts und ferner der Wartung. Darüber hinaus lassen sich die Wandelemente kostengünstiger herstellen, da an den vertikalen Rändern keine Verbindungsmittel vorgesehen werden müssen.

Sofern die starre Verbindung nicht ausschließlich über die horizontalen Endabschnitte gebildet ist, sondern zusätzlich eine Verbindung über zumindest einen Abschnitt der vertikalen Ränder, der einen Teil der starren Verbindung bildet, vorgesehen ist, weist der Abschnitt bzw., sofern mehrere der Abschnitte vorgesehen sind, weisen die Abschnitte gemeinsam zweckmäßigerweise höchstens eine Länge von 10 %, vorzugsweise höchstens von 5 % der Gesamtlänge der jeweilig miteinander verbundenen vertikalen Ränder auf. Verglichen mit den bekannten Türmen, bei denen die starre Verbindung über die gesamte Länge der vertikalen Ränder beseht, ist auch bei dieser Variante der Installations- und Wartungsaufwand erheblich reduziert, insbesondere wenn der Abschnitt bzw. die Abschnitte in einem einfach zugänglichen Bereich des Turmabschnitts gebildet ist bzw. sind.

In einer Ausgestaltung der Erfindung ist jedes der Wandelemente durch eine vorgefertigte Baueinheit gebildet, die eine Platte und das Verbindungsmittel aufweist. Die Platte ist in der bevorzugten Ausführungsform viereckig, vorzugsweise rechteckig oder trapezförmig. Die Platte ist zweckmäßigerweise länglich ausgebildet, wobei das Verhältnis von Länge zu Breite vorzugsweise zumindest 4:1, besonders bevorzugt zumindest 5:1, beträgt. Es versteht sich, dass die Wandelemente in dem Turmabschnitt derart angeordnet sind, dass ihre Längsachsen jeweils vertikal ausgerichtet sind. Die Platte, die vorzugsweise einteilig gebildet ist, weist in einer Ausführungsform der Erfindung Stahl, Beton oder einen Verbundwerkstoff, insbesondere Stahlbeton, der Faserverbundwerkstoff, vorzugsweise Glas- oder Kohlefaserverbundwerkstoff, auf oder ist aus einem dieser Materialien gebildet.
Zu ihrer mechanischen Verstärkung kann die Platte mit einer oder mehreren Versteifungsrippen versehen sein.
Die Platte weist zweckmäßigerweise eine ebene Form auf, sie kann aber auch gewölbt sein, damit sich der Turmabschnitt mit einer im Querschnitt zumindest abschnittsweise runden, vorzugsweise insgesamt kreisrunden, Form bilden lässt.

Das Wandelement ist in einer bevorzugten Ausführungsform der Erfindung zumindest 15 m, vorzugsweise zumindest 20 m, lang. Es ist bevorzugt zur Bildung eines unteren Bereichs des Turms, insbesondere des Fußes des Turms, vorgesehen. Vorstellbar ist aber auch, mehrere der genannten Turmabschnitte übereinander anzuordnen. Es könnte sogar der gesamte Turm aus den Wandelementen aufgebaut werden.

In einer Ausführungsform der Erfindung ist der Turm trotz der Anordnung der Wandelemente im horizontalen Abstand voneinander durch die Wandelemente im Wesentlichen nach außen geschlossen. Zweckmäßigerweise ist die Summe der Abstände der Wandelemente voneinander kleiner als 5 %, vorzugsweise kleiner als 3 %, des Gesamtumfangs des Turms. Die Abstände der Wandelemente betragen vorzugsweise 5 bis 25 cm, vorzugsweise 5 bis 15 cm.

In einer weiteren Ausgestaltung der Erfindung sind die vertikalen Ränder zumindest einzelner der unmittelbar benachbarten Wandelemente zur Erhöhung der Stabilität des Turmabschnitts abschnittsweise, vorzugsweise punktuell, durch zumindest ein Verbindungselement miteinander verbunden. Das Verbindungselement kann ein an dem Wandelement, ggf. einteilig mit dem Wandelement gebildeter, Vorsprung sein, der von dem jeweiligen vertikalen Rand in Richtung hin zu dem jeweils benachbarten Wandelement vorsteht und zur Ausbildung der Verbindung eingerichtet ist. Alternativ oder ergänzend könnte das Verbindungselement zur Befestigung an den Wandelementen, vorzugsweise mittels Schrauben oder Nieten oder durch Schweißen, vorgesehen sein. Zweckmäßigerweise ist das Verbindungselement eine Lasche, die vorzugsweise aus Stahl oder einem Verbundwerkstoff gebildet ist. Das Verbindungselement ist mit den jeweiligen vertikalen Rändern in vertikaler Richtung über eine Länge von maximal 50 cm, vorzugsweise maximal 30 cm, verbunden.

In einer Ausführungsform der Erfindung sind die vertikalen Ränder in einem derartigen Abstand voneinander angeordnet, dass durch die Freiräume zwischen den Wandabschnitten hindurchgegriffen werden kann, um das bzw. die Verbindungselemente zu montieren, zu prüfen und/oder zu warten. Dies erweist sich insbesondere als vorteilhaft, wenn die Verbindungselemente mit einer Schraubverbindung, insbesondere einer Schraube-Mutter-Verbindung, mit den Wandelementen verbunden ist. Die Schraubverbindung lässt sich dann durch eine einzige Person von der Außen- oder der Innenseite des Turms aus herstellen, prüfen und/oder warten. Zur Herstellung, Prüfung und Wartung kann von außen an die Stellen, an denen die Verbindungselemente die Wandelemente verbinden, z.B. mittels eines Hubwagens gelangt werden. Im Innenbereich des Turms muss keine Montage- oder Wartungsbühne vorgesehen werden.

Zweckmäßigerweise ist an den jeweiligen horizontalen Endabschnitten, vorzugsweise an den horizontalen Enden, der Wandelemente ein Verbindungsmittel, vorzugsweise ein Flansch gebildet, mittels dessen die Wandelemente mit einem Untergrund, weiteren Wandelementen eines anderen Turmabschnitts, einem eine Windturbine tragenden Turmkopf und/oder einem Adapterelement verbindbar sind, das zur Bildung eines Verbindungsglieds zwischen den Wandelemente einerseits und dem Untergrund, den Wandelementen des weiteren Turmabschnitts und/oder dem Turmkopf andererseits vorgesehen ist.

Zweckmäßigerweise sind sämtliche Wandelemente des Turms, onshore oder offshore, auf einem einzigen Fundament angeordnet.

Die Erfindung wird nachfolgend anhand von Ausführungsbeispielen und der beiliegenden, sich auf diese Ausführungsbeispiele beziehenden Zeichnungen näher erläutert. Es zeigen:
- Fig. 1: eine Windkraftanlage, die mit einem erfindungsgemäßen Turm ver-sehen ist,
- Fig. 2: einen Teil des erfindungsgemäßen Turms nach Fig. 1 in perspek-tivischer Ansicht,
- Fig. 3: einen Teil des Turms nach Fig. 1 in Seitenansicht,
- Fig. 4: erfindungsgemäße Wandelemente des Turms nach Fig. 1,
- Fig. 5: Details eines Teils des Turms nach Fig. 1,
- Fig. 6: verschiedene Schnitte des Turms nach Fig. 1,
- Fig. 7: ein weiteres Detail des Turms nach Fig. 1,
- Fig. 8 und 9: Schnitte von weiteren erfindungsgemäßen Türmen,
- Fig. 10: einen Teil eines weiteren erfindungsgemäßen Turms, und
- Fig. 11: einen Teil eines weiteren erfindungsgemäßen Turms.

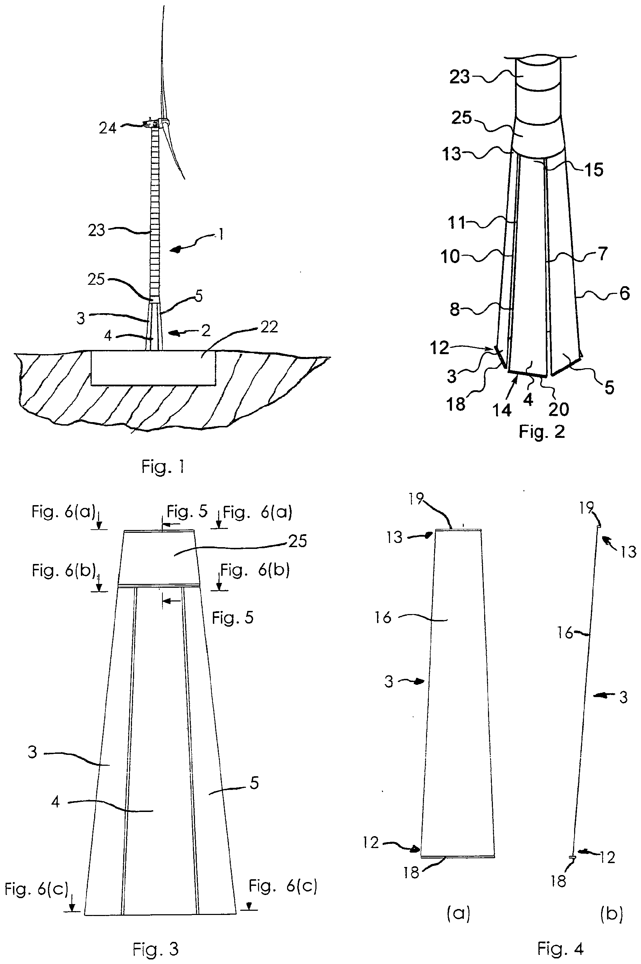

In Fig. 1 ist eine Windkraftanlage dargestellt, die einen Turmkopf 24 aufweist, der einen Generator trägt und auf einem erfindungsgemäßen Turm 1 befestigt ist. Der Turm 1 ist mit einem unteren Turmabschnitt 2 an einem Fundament 22 befestigt, das in einem Untergrund eingelassen ist. Wie in Fig. 2 und 3 genauer gezeigt ist, weist der untere Turmabschnitt 2 sechs Wandelemente 3,4,5,6,7,8 auf. Vertikale Seitenränder 10,11 der Wandelemente 3,4,5,6,7,8 sind über ihre gesamte Länge im Abstand voneinander angeordnet. Allerdings sind die jeweiligen Abstände im Verhältnis zur Breite der Wandelemente 3,4,5,6,7,8 verhältnismäßig gering, sodass der Turm durch die Wandelemente 3,4,5,6,7,8 nach außen im Wesentlichen geschlossen ist. Im vorliegenden Beispiel beträgt die Summe der horizontalen Abstände zwischen den Wandelementen 3,4,5,6,7,8 weniger als 4 % des Gesamtumfangs des Turms 1.
Die genauere Ausgestaltung der Wandelemente 3,4,5,6,7,8 sowie ihre Anordnung im Verhältnis zueinander ist nachfolgend anhand des Wandelements 3 und der unmittelbar benachbart zueinander angeordneten Wandelemente 3 und 4 erläutert, sie gilt aber für sämtliche der Wandelemente 3,4,5,6,7,8.
Das einzeln in Fig. 4 dargestellte Wandelement 3 umfasst eine Platte 16, welche die Form eines gleichschenkligen Trapezes aufweist und an Grundseiten des Trapezes, die horizontale Enden 12,13 der Wandelemente 3 bilden, mit jeweils einem Flansch 18,19 versehen sind. Der untere Flansch 18 ist als T-Flansch, der obere Flansch als L-Flansch, der ins Turminnere zu richten ist, ausgebildet. Die Platte 16 sowie die Flansche 18,19 bestehen bspw. aus Stahl oder einem Verbundwerkstoff.

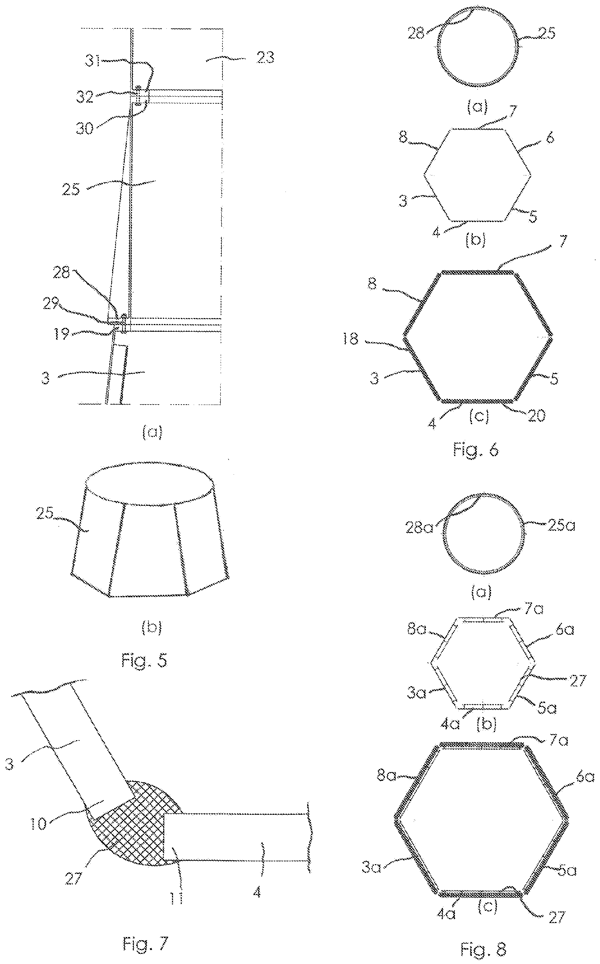

An ihren unteren Enden 12,14 sind die Wandelemente 3,4 über die Flansche 18,20 (vgl. Fig. 2) an dem Fundament 22 mit hier nicht gezeigten Verbindungsmitteln, z.B. Schrauben und Muttern, befestigt und an ihren oberen Enden 13,15 mit einem in Fig. 5 gezeigten Adapterelement 25 verbunden. Das Adapterelement 25 weist eine zu den Flanschen 19,21 passenden Flansch 28 auf, sodass sich die Wandelemente 3,4 mit dem Adapterelement 25 mittels Schrauben und Muttern 29 starr verbinden lassen. Das Adapterelement 25 bildet ein Verbindungsglied zu weiteren Turmabschnitten 23 und ist mit den weiteren Turmabschnitten 23 über einen Flansche 30 des Adapterelements 25 und einen dazu passenden Flansch 31 des weiteren Turmabschnitts 23 ebenfalls mit Schrauben und Muttern 32 verbunden. Das Adapterelement 25 bildet einen Übergang zwischen dieser kreisrunden Form und der in Fig. 6b gezeigten sechseckigen Form des Turmabschnitts 2. Fig. 6c zeigt die unteren Enden 12,14 mit den dort vorgesehenen Flanschen 18,20.

Trapezschenkel der Platten 16 der Wandelemente 3,4, die vertikale Ränder 10,11 der Wandelemente 3,4 bilden, sind in dem Turmabschnitt 2 in einem derartigen Abstand voneinander angeordnet, dass sie sich über ihre gesamte Länge nicht berühren.
Eine starre Verbindung der Wandelemente 3,4,5,6,7,8 miteinander erfolgt folglich lediglich über die jeweiligen Flansche 18,19,20 und das Fundament 22 sowie das Adapterelement 25.

In Fig. 6 sind verschiedene horizontale Schnitte durch den Turm 1 dargestellt, deren Schnittebenen in Fig. 3 gezeigt sind. Wie Fig. 6a zeigt, weist das Adapterelement 25 an seinem oberen Ende, an dem es mit dem Flansch 31 versehen ist, eine kreisrunde Form auf, die genau zur kreisrunden Querschnittsform der Turmabschnitte 23 passt.

Um den Turmabschnitt 2 nach außen hin vor Umwelteinflüssen abzudichten, kann, wie in Fig. 7 dargestellt, zwischen den vertikalen Rändern 10,11 ein Dichtungsmaterial 27, z.B. ein Dichtungsgummi, angeordnet sein.

Es wird nun auf die Fig. 8 bis 11 Bezug genommen, wo gleiche oder gleichwirkende Teile mit derselben Bezugszahl wie in den Fig. 1 bis 6 bezeichnet sind und der betreffenden Bezugszahl jeweils ein Buchstabe beigefügt ist.

Das Ausführungsbeispiel nach Fig. 8 zeigt, dass Wandelemente 3a,4a,5a,6a,7a,8a zu ihrer mechanischen Verstärkung, z.B. auf ihrer den Turminneren zugewandten Seiten, mit Versteifungsrippen 27 versehen sein können.

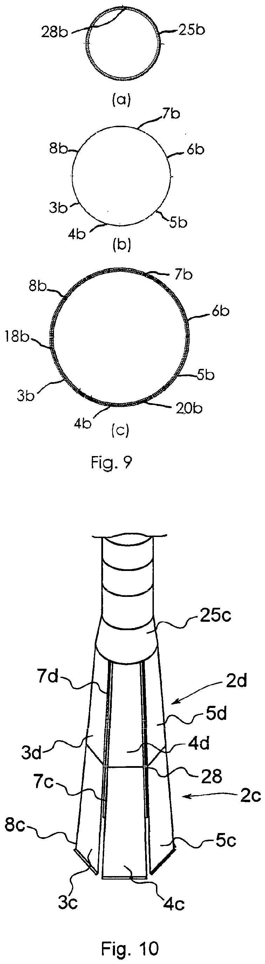

Ferner könnten Wandelemente 3b,4b,5b,6b,7b,8b, wie Fig. 9 zeigt, um ihre Längsachse gewölbt sein, um einem Turmabschnitt 2bbeine runde Form zu geben. Es versteht sich, dass die Wölbungen der Wandelemente 3b,4b,5b,6b,7b,8b nicht unbedingt derart gewölbt sein müssen, dass sich, wie hier dargestellt, eine kreisrunde Form des Querschnitts ergibt. Auch die gewölbten Wandelemente 3b,4b,5b,6b,7b,8b können mit einer in ihrer Form an die Wölbung angepasst Versteifungsrippe versehen sein.

Die unteren Flansche 18 der Wandelemente sind in den vorliegenden Ausführungsbeispielen als T-Flansche gezeigt. Sie könnten jedoch auch als zur Turminnen-oder zur Turmaußenseite hin gerichtete L-Flansche gebildet sein. Auch die oberen Flansche 19 könnten als T-Flansch oder zur Turmaußenseite hin gerichtete L-Flansche gebildet sein.
Ferner könnten die Platten 16 abweichend von der gezeigten Trapezform andere geeignete Formen aufweisen. Sie könnten z.B. rechteckig sein.

In Fig. 10 ist ein unterer Teil eines weiteren erfindungsgemäßen Turms dargestellt, der einen unteren, an einem Fundament befestigten Turmabschnitt 2c mit Wandelementen 3c,4c,5c,6c,7c,8c und einen weiteren, über dem Turmabschnitt 2c angeordneten Turmabschnitt 2d, der weitere Wandelemente 3d,4d,5d,6d,7d,8d aufweist. Die Wandelemente 3c,4c,5c,6c,7c,8c, 3d,4d,5d,6d,7d,8d sind über ein Verbindungsrahmen 28 miteinander verbunden, an dem zum Turminneren hin gerichtete, hier nicht gezeigte L-Flansche befestigt sind. Durch die Anordnung übereinander lassen sich in der erfindungsgemäßen Ausgestaltung des Turms größere Höhen erreichen. Ggf. lässt sich ein gesamter Turm mittels der erfindungsgemäßen Wandelemente aufbauen.

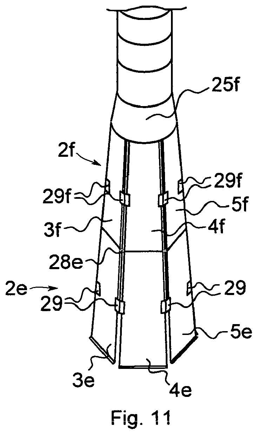

Bei dem in Fig. 11 gezeigten unteren Teil eines weiteren erfindungsgemäßen Turms sind Wandelemente 3e,4e,5e sowie 3f,4f,5f an ihren vertikalen Rändern mittels Laschen 29 bzw. 29f miteinander verbunden. Die Laschen 29,29f sind durch Schweißen oder durch Verschraubungen an den Wandelementen 3e,4e,5e,3f,4f,5f befestigt. Sie dienen dazu, die Stabilität der jeweiligen Turmabschnitte 2e,2f, die durch die Wandelemente 3e,4e,5e,3f,4f,5f gebildet sind, zu vergrößern. Abweichend von dem Ausführungsbeispiel nach Fig. 11, bei dem die Wandelemente 3e,4e,5e, 3f,4f,5f wie oben anhand von Fig. 10 erläutert ist durch einen Verbindungsrahmen 28e miteinander verbunden sind, können die Laschen 29,29f auch dazu verwendet werden, die Wandelemente 3,4,5,6,7,8 (wie oben anhand der Figuren 1 bis 9 erläutert) zu verbinden. Insbesondere kann die Verbindung auch vorgesehen sein, wenn zwischen den vertikalen Rändern 10,11 das Dichtungsmaterial 27 (vgl. Fig. 7 und der Erläuterungen dazu) angeordnet ist. Es versteht sich, dass zur Verbindung der jeweilig benachbarten Wandelementen 3,4,5,6,7,8,3e,4e,5e,3f,4,5f über die vertikalen Ränder auch mehrere der Laschen 29,29f vorgesehen sein könnten.
Sofern zwischen den vertikalen Rändern der Wandelemente 3,4,5,6,7,8, 3e,4e, 5e,3f,4,5f kein Dichtungsmaterial 27 vorgesehen ist, können die Laschen 29,29f und ihre jeweiligen Verbindungen mit den Wandelementen 3,4,5,6,7,8,3e,4e,5e,3f,4,5f von einer Seite des Turms, insbesondere von der Außenseite aus hergestellt, geprüft und/oder gewartet werden, wobei dazu durch den Freiraum zwischen den Wandelementen 3,4,5,6,7,8,3e,4e,5e,3f,4,5f hindurchgegriffen werden kann. Falls das Dichtungsmaterial 27 vorgesehen ist, kann neben den Laschen 29,29f eine, vorzugsweise verschließbare, Öffnung im Dichtungsmaterial 27 vorgesehen sein, durch die hindurchgegriffen werden kann.

## Patentansprüche

1. Turm einer Windkraftanlage, der zumindest einen Turmabschnitt (2) umfasst, der mehrere tragende Wandelemente (3 - 8) aufweist, welche horizontal nebeneinander angeordnet eine Außenwand (10) des Turms (1) bilden, wobei eine starre Verbindung zwischen den Wandelementen (3 - 8), die direkt nebeneinander angeordnet sind, über horizontale Endabschnitte (12 - 15) der Wandelemente (3 - 8) gebildet ist und nicht oder lediglich abschnittsweise über vertikale Ränder (10,11) der Wandelemente (3 - 8) erfolgt, wobei die vertikalen Ränder (10,11) der Wandelemente (3 - 8), die jeweils direkt benachbart zueinander angeordnet sind, in horizontaler Richtung vollständig in Abstand voneinander angeordnet sind,
**dadurch gekennzeichnet,**
**dass** zwischen den Wandelementen (3 - 8) Mittel (26) zur Abdichtung des Turms (1) nach außen angeordnet sind.

2. Turm nach Anspruch 1,
**dadurch gekennzeichnet,**
**dass** die vertikalen Ränder (10,11) zumindest einzelner der direkt benachbarten Wandelemente (3-8) durch zumindest ein Verbindungselement (29), das vorzugsweise durch einen von dem Wandelement (3-8) vorstehenden Vorsprung oder durch eine Lasche gebildet ist, abschnittsweise miteinander verbunden sind.

3. Turm nach Anspruch 1 oder 2,
**dadurch gekennzeichnet,**
**dass** ein Abschnitt oder mehrere Abschnitte der vertikalen Ränder, über die die starre Verbindung gebildet ist, gemeinsam höchstens eine Länge von 10 %, vorzugsweise höchstens von 5 %, der Gesamtlänge der jeweilig miteinander verbundenen vertikalen Ränder (10,11) aufweisen.

4. Turm nach einem der Ansprüche 1 bis 3,
**dadurch gekennzeichnet,**
**dass** an den horizontalen Endabschnitten (12-15) jeweils ein Verbindungsmittel (18 - 21), vorzugsweise ein Flansch, gebildet ist, mittels dessen die Wandelemente (3 - 8) mit einem Untergrund (22), weiteren Wandelementen eines anderen Turmabschnitts (23), einem eine Windturbine tragenden Turmkopf (24) und/oder einem Adapterelement (25) verbindbar sind, mittels dessen sich die Wandelemente (3 - 8) mit dem Untergrund (22), den weiteren Wandelementen, und/oder Turmkopf (24) verbinden lassen.

5. Turm nach Anspruch 4,
**dadurch gekennzeichnet,**
**dass** jedes der Wandelemente (3 - 8) durch eine vorgefertigte Baueinheit gebildet ist und die Baueinheit eine Platte (16), die vorzugsweise mit Mitteln zu ihrer mechanischen Verstärkung (17) versehen ist, und das Verbindungsmittel (18 - 21) aufweist.

6. Turm nach Anspruch 5,
**dadurch gekennzeichnet,**
**dass** die, vorzugsweise einteilig gebildete, Platte (16) aus Stahl oder einem Verbundwerkstoff, insbesondere Stahlbeton oder Faserverbundwerkstoff, gebildet ist.

7. Turm nach einem der Ansprüche 5 bis 6, **dadurch gekennzeichnet,**
**dass** die Platte (16) eben oder gewölbt ist.

8. Verfahren zur Herstellung eines Turms (1) einer Windkraftanlage, der zumindest einen Turmabschnitt (2) umfasst, der mehrere tragende Wandelemente (3 - 8) aufweist, welche horizontal nebeneinander angeordnet eine Außenwand (10) des Turms (1) bilden, wobei eine starre Verbindung zwischen den Wandelementen (3 - 8), die direkt nebeneinander angeordnet sind, über horizontale Endabschnitte (12 - 15) der Wandelemente (3 - 8) gebildet wird und nicht oder lediglich abschnittsweise über vertikale Ränder (10,11) der Wandelemente (3 - 8) erfolgt, wobei die vertikalen Ränder (10,11) der Wandelemente (3 - 8), die jeweils direkt benachbart zueinander angeordnet sind, in horizontaler Richtung vollständig in Abstand voneinander angeordnet werden,
**dadurch gekennzeichnet,**
**dass** zwischen den Wandelementen (3 - 8) Mittel (26) zur Abdichtung des Turms (1) nach außen angeordnet werden.

9. Verfahren nach Anspruch 8,
**dadurch gekennzeichnet,**
**dass** die vertikalen Ränder (10,11) zumindest einzelner der benachbarten Wandelemente (3-8) durch zumindest ein Verbindungselement (29), das vorzugsweise durch einen von dem Wandelement (3 - 8) vorstehenden Vorsprung oder durch eine Lasche gebildet wird, abschnittsweise miteinander verbunden werden.

10. Verfahren nach Anspruch 8 oder 9,
**dadurch gekennzeichnet,**
**dass** die Wandelemente (3 - 8), onshore oder offshore, auf lediglich einem einzigen Fundament angeordnet werden.

## Claims

1. Tower of a wind power plant, comprising at least one tower segment (2) that has a plurality of load-bearing wall elements (3 - 8) which, arranged horizontally next to one another, form an outer wall (10) of the tower (1), wherein a rigid connection is formed, between the wall elements (3 - 8) that are arranged directly next to one another, by means of horizontal end portions (12 - 15) of the wall elements (3 - 8), and is not effected, or is effected only in certain segments, by means of vertical edges (10,11) of the wall elements (3 - 8), wherein the vertical edges (10, 11) of the wall elements (3 - 8), which are in each case arranged directly adjacent to one another, are arranged entirely at a distance from one another in the horizontal direction,
**characterized in that**
means (26) for sealing the tower (1) outwardly are arranged between the wall elements (3 - 8).

2. Tower according to Claim 1,
**characterized in that**
the vertical edges (10,11) of at least individual wall elements of the directly adjacent wall elements (3 - 8) are connected to one another in certain segments by at least one connection element (29), which is preferably formed by a projection projecting from the wall element (3 - 8) or by a lug.

3. Tower according to Claim 1 or 2,
**characterized in that**
a segment or a plurality of segments of the vertical edges by means of which the rigid connection is formed jointly are of a length of not more than 10 %, preferably not more than 5 % of the total length of the vertical edges (10,11) respectively connected to one another.

4. Tower according to any one of Claims 1 to 3,
**characterized in that**
formed on each of the respective horizontal end segments (12 - 15) there is a connection means (18-21), preferably a flange, by means of which the wall elements (3 - 8) can be connected to a footing (22), to further wall elements of another tower segment (23), to a tower head (24) carrying a wind turbine, and/or to an adapter element (25), by means of which the wall elements (3 - 8) can be connected to the footing (22), the further wall elements and/or the tower head (24).

5. Tower according to Claim 4,
**characterized in that**
each of the wall elements (3 - 8) is formed by a prefabricated structural unit, and the structural unit has a plate (16), which is preferably provided with means for mechanical reinforcement (17) thereof, and has the connection means (18 - 21).

6. Tower according to Claim 5,
**characterized in that**
the plate (16), preferably formed as a single piece, is composed of steel or a composite material, in particular reinforced concrete or fiber composite material.

7. Tower according to any one of Claims 5 to 6,
**characterized in that**
the plate (16) is flat or curved.

8. Method for producing a tower (1) of a wind power plant, which comprises at least one tower segment (2) that has a plurality of load-bearing wall elements (3 - 8) which, arranged horizontally next to one another, form an outer wall (10) of the tower (1), wherein a rigid connection is formed, between the wall elements (3 - 8) that are arranged directly next to one another, by means of horizontal end portions (12 - 15) of the wall elements (3 - 8), and is not effected, or is effected only in certain segments, by means of vertical edges (10,11) of the wall elements (3 - 8), wherein the vertical edges (10, 11) of the wall elements (3 - 8), which are in each case arranged directly adjacent to one another, are arranged entirely at a distance from one another in the horizontal direction,
**characterized in that**
means (26) for sealing the tower (1) outwardly are arranged between the wall elements (3 - 8)

9. Method according to Claim 8,
**characterized in that**
the vertical edges (10,11) of at least individual wall elements of the adjacent wall elements (3 - 8) are connected to one another in certain segments by at least one connection element (29), which is preferably formed by a projection projecting from the wall element (3 - 8) or by a lug.

10. Method according to Claim 8 or 9,
**characterized in that**
the wall elements (3 - 8), onshore or offshore, are arranged on only one single foundation.

## Revendications

1. Tour d'une éolienne, qui comprend au moins une partie de tour (2) présentant plusieurs éléments porteurs de paroi (3-8), qui forment une paroi externe (10) de la tour (1) lorsqu'ils sont placés horizontalement les uns à côté des autres, une liaison rigide étant formée entre les éléments de paroi (3-8), qui sont disposés directement les uns à côté des autres, via des parties d'extrémité horizontales (12-15) des éléments de paroi (3-8) et non pas ou uniquement en partie via des bords verticaux (10,11) des éléments de paroi (3-8), les bords verticaux (10,11) des éléments de paroi (3-8), qui sont disposés respectivement de manière directement adjacente les uns par rapport aux autres, étant disposés dans la direction horizontale complètement à une certaine distance les uns des autres, **caractérisée en ce que** des moyens (26) pour sceller la tour (1) de l'extérieur sont disposés entre les éléments de paroi (3-8).

2. Tour selon la revendication 1, **caractérisée en ce que** les bords verticaux (10,11) d'au moins certains des éléments de paroi directement adjacents (3-8) sont reliés en partie les uns aux autres via au moins un élément de liaison (29), qui est de préférence formé par une partie en saillie dépassant par rapport à l'élément de paroi (3-8) ou par une patte.

3. Tour selon la revendication 1 ou 2, **caractérisée en ce qu'**une partie ou plusieurs parties des bords verticaux, via lesquels la liaison rigide est formée, présentent ensemble au plus une longueur représentant 10%, de préférence présentant au plus 5%, de la longueur totale des bords verticaux (10,11) reliés respectivement les uns aux autres.

4. Tour selon l'une quelconque des revendications 1 à 3, **caractérisée en ce qu'**un moyen de liaison (18-21), de préférence une bride, est formé au niveau des parties d'extrémité horizontales (12-15), au moyen duquel les éléments de paroi (3-8) peuvent être reliés à un support (22), à d'autres éléments de paroi d'une autre partie de tour (23), à une tête de tour (24) portant une turbine éolienne et/ou à un élément adaptateur (25), au moyen duquel les éléments de paroi (3-8) peuvent être reliés au support (22), aux autres éléments de paroi et/ou à la tête de tour (24).

5. Tour selon la revendication 4, **caractérisée en ce que** chaque élément de paroi (3-8) est formé par un module préfabriqué et le module présente une plaque (16), qui est de préférence pourvue de moyens pour son renforcement mécanique (17) et qui présente le moyen de liaison (18-21).

6. Tour selon la revendication 5, **caractérisée en ce que** la plaque (16), de préférence en une seule pièce, est réalisée en acier ou en un matériau composite, en particulier en béton armé ou en un matériau composite fibreux.

7. Tour selon l'une quelconque des revendications 5 à 6, **caractérisée en ce que** la plaque (16) est plane ou courbée.

8. Procédé pour la fabrication d'une tour (1) d'une éolienne, qui comprend au moins une partie de tour (2) présentant plusieurs éléments porteurs de paroi (3-8), qui forment une paroi externe (10) de la tour (1) lorsqu'ils sont placés horizontalement les uns à côté des autres, une liaison rigide étant formée entre les éléments de paroi (3-8), qui sont disposés directement les uns à côté des autres, via des parties d'extrémité horizontales (12-15) des éléments de paroi (3-8) et non pas ou uniquement en partie via des bords verticaux (10,11) des éléments de paroi (3-8), les bords verticaux (10,11) des éléments de paroi (3-8), qui sont disposés respectivement de manière directement adjacente les uns par rapport aux autres, étant disposés dans la direction horizontale complètement à une certaine distance les uns des autres, **caractérisé en ce que** des moyens (26) pour sceller la tour (1) de l'extérieur sont disposés entre les éléments de paroi (3-8).

9. Procédé selon la revendication 8, **caractérisé en ce que** les bords verticaux (10,11) d'au moins certains des éléments de paroi adjacents (3-8) sont reliés en partie les uns aux autres via au moins un élément de liaison (29), qui est de préférence formé par une partie en saillie dépassant par rapport à l'élément de paroi (3-8) ou par une patte.

10. Procédé selon la revendication 8 ou 9, **caractérisé en ce que** les éléments de paroi (3-8) sont disposés sur seulement une seule fondation, on-shore ou off-shore.
